# EUROPÄISCHE PATENTSCHRIFT

(11) **EP 2 734 694 B1**
(45) Veröffentlichungstag und Bekanntmachung des Hinweises auf die Patenterteilung: **13.01.2016**
(21) Anmeldenummer: 12753054.1
(22) Anmeldetag: 07.07.2012
(51) Int. Cl.: B60K 15/05, E05C 19/02, E05C 5/04, E05B 83/34

(54) **TANKKLAPPENVERRIEGELUNG**
FUEL TANK CAP LOCK
DISPOSITIF DE VERROUILLAGE DE BOUCHON DE RÉSERVOIR

(30) Priorität: 22.07.2011 DE 102011108154; 15.08.2011 DE 102011114659; 18.10.2011 DE 102011116068
(43) Veröffentlichungstag der Anmeldung: 28.05.2014
(73) Patentinhaber: Kiekert Aktiengesellschaft, 42579 Heiligenhaus (DE)
(72) Erfinder: BASAVARAJAPPA, Madhu, S., 40211 Düsseldorf (DE); WAHMANN, Hendrik, 46029 Düsseldorf (DE)
(74) Vertreter: Gille Hrabal
(86) Internationale Anmeldenummer: PCT/DE2012/000687
(87) Internationale Veröffentlichungsnummer: WO 2013/013653

(56) Entgegenhaltungen:
- EP-A1- 1 018 588
- DE-A1- 19 747 707
- GB-A- 2 149 447
- US-A- 3 397 000
- US-A1- 2001 050 486

## Beschreibung

Die Erfindung betrifft eine Verriegelung für eine Tank- oder Ladeklappe in einem Fahrzeug, mit einem durch Öffnen und Schließen der Tank- oder Ladeklappe zwischen einer Öffnung- und einer Schließposition verstellbaren Riegelbolzen.

Eine Verriegelung mit den Merkmalen des Oberbegriffs des Anspruchs 1 zeigt die EP 1 018 588 A1.

Verriegelungen für Tankklappen sind zudem zum Beispiel aus der DE 10 2011 076 810 bekannt. Die Tankklappe wird nach Beendigung des Tankvorgangs von Hand geschlossen, dabei wird eine Kraft auf einen Riegelbolzen ausgeübt, sodass dieser sich aus seiner ausgefahrenen Öffnungs- in seine eingefahrene Schließposition verstellt. Bei Betätigung der Tankklappe wird der Bolzen gleichzeitig um seine Längsachse verdreht und dadurch an seinem der Tankklappe zugewandten Ende in der Tankklappe fixiert, so dass der Verschluss hergestellt ist. Die in diesem Zusammenhang bisher eingesetzte Mimik baut sehr kompliziert und umfasst eine Vielzahl von Bauteilen. In Konsequenz führt dies unter anderem auch dazu, dass vergleichsweise starke Antriebe für den in der Regel über die Zentralverriegelung gesteuerten Schließvorgang notwendig sind. Die Vielzahl von kompliziert bauenden Einzelteilen führt außerdem zu einem hohen Montageaufwand und zu einer erheblichen Störungsanfälligkeit. Unter Ladeklappen sind insbesondere Abdeckungen für Ladebuchsen in einem Elektrofahrzeug zum Nachladen von Batterien zu verstehen.

Damit stellt sich der vorliegenden Erfindung die Aufgabe, eine Verriegelung für eine Tank- oder Ladeklappe in einem Fahrzeug mit einer minimalen Anzahl von Bauteilen zu schaffen, um die Montage zu vereinfachen, die Störungsanfälligkeit zu verringern und um kleinere Antriebe zur Handhabe dieser Verriegelung einsetzen zu können.

Diese Aufgabe wird dadurch gelöst, dass der Riegelbolzen in dem Gehäuse der Verriegelung in Richtung seiner Längsachse gegen die Kraft einer Druckfeder und um seine Längsachse gegen die Kraft einer Torsionsfeder zwangsgeführt ist, und zwar ist mittels der Torsionsfeder eine Kraft in unterschiedliche Richtungen erzielbar, einmal im Uhrzeigersinn und einmal gegen den Uhrzeigersinn.

Durch diese Ausbildung und Lagerung des Riegelbolzens ist eine besonders kompakte Verriegelung für eine Tank- oder Ladeklappe in einem Fahrzeug verwirklicht, die mit einer minimalen Zahl von Bauteilen auskommt. Hierzu ist der zwischen einer ausgefahrenen Öffnungs- und einer eingefahrenen Schließposition verstellbare Riegelbolzen in dem Gehäuse der Verriegelung bei der Verstellung von der Öffnungs- in die Schließposition und wieder zurück zwangsgeführt. Eine Druckfeder, die in Längsachsenrichtung des Riegelbolzens wirkt und eine Torsionsfeder, die um selbige wirkt, führen in Zusammenspiel mit dieser Zwangsführung zu einer direkten und effektiven Verstellung der Verriegelung zwischen den unterschiedlichen Positionen.

Die Zwangsführung befindet sich zwischen Riegelbolzen und Gehäuse und zwar in Form einer Kulisse, die dem Riegelbolzen und/oder dem Gehäuse zugeordnet ist. Zweckmäßigerweise ist vorgesehen, dass in Bezug auf den Riegelbolzen als Teil der Zwangsführung auf dessen Mantelfläche eine in sich geschlossene, rundum laufende Kulisse dient.

Als gehäuseseitiges Gegenstück zu dieser Kulisse dient in Bezug auf das Gehäuse als Zwangsführung ein in der Kulisse auf der Mantelfläche des Riegelbolzens geführter Stift. Dieser ist in der in sich geschlossen, bahnartig ausgebildeten Kulisse stets zwangsgeführt, so dass er die Kulisse bei der Verstellung des Riegelbolzens stets von neuem durchläuft.

Bei der Verstellung des Riegelbolzens zwischen Öffnungs- und Schließposition verschiebt sich dieser auf der vorgegebenen, rundum verlaufenden Kulisse, wozu diese Kulisse zwei einander gegenüberliegende, im Wesentlichen diagonal verlaufende Abschnitte aufweist. Diese diagonal verlaufenden Abschnitte sind vergleichsweise lang ausgebildet, weil sie den Weg abbilden, den letztlich der Riegelbolzen zwischen der Öffnungs- und der Schließposition in Zusammenspiel mit der in Längsachsenrichtung orientierten Druck- und der um diese Achse wirkenden Torsionsfeder beschreibt.

Ein ungewolltes Öffnen der Tank- oder Ladeklappe wird vermieden, wenn zwischen den beiden diagonal verlaufenden Abschnitten ein zur Sicherung einer Halteposition des Riegelbolzens in dessen Schließposition dienender Kulissenabschnitt vorgesehen ist. Dieser erweist sich insbesondere bei zu fester oder zu langer Betätigung der Klappe als vorteilhaft, weil der entsprechende Kulissenabschnitt eine Art Zwischenstellung des in der Kulisse geführten Stiftes ermöglicht. Dieser verhindert, dass sich der Riegelbolzen aus der eingefahrenen, seiner Schließstellung entsprechenden Position ungewollt unter gleichzeitiger Öffnung der Tank- oder Ladeklappe verstellt.

Da sich der Stift bei Riegelbolzen in Schließposition am oberen Ende der Kulisse befindet, ist es notwendig, dass der Kulissenabschnitt am oberen Ende der Kulisse vorgesehen ist. Der Abschnitt erstreckt sich also an dem oberen Übergang zwischen den beiden diagonal verlaufenden Kulissenabschnitten.

Eine besonders bevorzugte Ausführungsform der Erfindung sieht vor, dass der Kulissenabschnitt im Wesentlichen V-förmig ausgebildet ist. Darunter wird verstanden, dass der zur Sicherung dienende Kulissenabschnitt zwei diagonal in V-Form angeordnete Flanken aufweist, die an ihren unteren Enden noch einen quer verlaufenden Übergang aufweisen können, in dem sich der Stift in der Schließposition des Riegelbolzens befindet.

Anders formuliert, der Kulissenabschnitt soll zwei versetzt zueinander angeordnete diagonale Abschnitte und einen diese verbindenden horizontalen Abschnitt aufweisen, um diese zusätzliche Sicherungsstellung in der Kulisse zu realisieren.

Ein ergänzender Vorschlag sieht vor, dass die Tank- oder Ladeklappe korrespondierend zu dem Kulissenabschnitt ausgebildet ist. Hierunter wird zum Beispiel verstanden, dass sich eine Dichtung, vorzugsweise eine Gummi- oder Kunststoffdichtung an der Tankklappe befindet, welche den Riegelbolzen in der gesicherten Position in dem Kulissenabschnitt hält.

Die Kulisse umfasst zugleich Abschnitte, in der die Verstellung des Riegelbolzens ausschließlich in horizontaler Richtung gegen die Kraft der Torsionsfeder und in vertikaler Richtung gegen die Kraft der Druckfeder erfolgt. Im Bereich dieser Abschnitte erfolgt die jeweilige Umkehr zwischen dem Öffnungs- und dem Schließvorgang durch das Ein- beziehungsweise Ausfahren des Riegelbolzens. Es ist in diesem Zusammenhang vorgesehen, dass die diagonal verlaufenden Abschnitte am oberen Ende der Kulisse durch einen Übergang mit einem horizontal verlaufenden Abschnitt und/oder einem vertikal verlaufenden Abschnitt verbunden sind. Dieser bildet den Übergang zur Schließposition des Riegelbolzens. Insofern sind in diesem Übergang in dieser Reihenfolge ein horizontaler, dann ein vertikaler und schließlich wieder ein horizontaler Abschnitt angeordnet.

Ergänzend wird vorgeschlagen, dass die diagonal verlaufenden Abschnitte am unteren Ende der Kulisse durch einen horizontal verlaufenden Übergang verbunden sind. Dieser Übergang leitet wieder in die Öffnungsstellung des Schließbolzens über.

Maßgeblich für die Verwirklichung der vorliegenden Erfindung ist die Torsionsfeder und ihre Anordnung und Ausbildung. Ein wesentlicher Vorteil in diesem Zusammenhang liegt darin, dass die Ausbildung und/oder Lagerung der Torsionsfeder in dem Gehäuse der Verriegelung das Ausüben einer Vorspannung in beide Wirkrichtungen der Torsionsfeder ermöglicht. Dies führt dazu, dass die Torsionsfeder in Abhängigkeit von ihrer Positionierung in beide Wirkrichtungen, in und gegen die Uhr, Kraft aufbringen kann und sich damit auch auf die Verstellung des Riegelbolzens zurück in seine Öffnungsstellung auszuwirken. Die Lagerung der Torsionsfeder ist folglich so, dass sie sich gewissermaßen bei der Drehung in die eine Richtung vorspannt, sodass eine ausreichende Kraft dann beim späteren, durch die Kulisse bedingten Drehen in die entgegen gesetzte Richtung aufgebracht werden kann.

Um dieses Ziel zu erreichen, stützt sich die Torsionsfeder an dem Gehäuse der Verriegelung und dem Riegelbolzen und/oder einem fest mit dem Riegelbolzen verbundenen Schwenkhebel ab. In einer bevorzugten Ausbildung bildet der Riegelbolzen mit diesem Schwenkhebel eine Baueinheit, die ihrerseits mit der Ausbildung und Lagerung der Torsionsfeder korrespondiert. Das heißt, die Torsionsfeder stützt sich in den jeweiligen Positionen einerseits gehäuseseitig und andererseits über den mit dem Riegelbolzen verbundenen Schwenkhebel ab und übt das erforderliche Moment auf den Riegelbolzen bei dessen Verstellung zwischen Schließ- und Öffnungsposition aus.

Zwecks dieser Abstützung weist der Schwenkhebel einen Anschlag für die Torsionsfeder auf. Der Riegelbolzen nimmt über den Schwenkhebel bei seiner Verstellung einen jeweils an den Enden der Torsionsfeder vorgesehenen, quer verlaufenden Schenkel über den Anschlag an dem Schwenkhebel mit. Gehäuseseitige Einbauten sorgen jeweils ergänzend für den entsprechenden Anschlag.

Was den Übergang von der geschlossenen in die endgültig verriegelte Position angeht, ist vorgesehen, dass zum Verriegeln der Tankklappe eine mit einem Antrieb versehene Sperrklinke dient. Die Sperrklinke kann bei verriegelter Tankklappe den Schwenkhebel blockieren und damit ein Verstellen des Riegelbolzens verhindern. Auch dieser Mechanismus baut vergleichsweise einfach und damit effektiv, weil über den vorteilhafterweise besonders klein bauenden Antrieb eben nur diese Sperrklinke aus einer neutralen in eine Position geschaltet werden muss, bei der sie ein Verstellen des Riegelbolzens verhindert.

Ergänzend hierzu ist vorgesehen, dass die Sperrklinke durch eine Feder in der Schließstellung gehalten ist. Die Feder wirkt derart, dass die Sperrklinke gegen den mit dem Riegel in Wirkverbindung stehenden Schwenkhebel gedrückt wird. Einerseits kann die Feder die Bewegung des Schwenkhebels blockieren, wobei die Sperrklinke mit einer Rastnut gegen den Schwenkhebel wirkt und andererseits kann die Sperrklinke mittels der Feder auch lediglich gegen den Schwenkhebel drücken, so dass die Sperrklinke gegen den Schwenkhebel anliegt. Insbesondere in dem Fall, in dem die Sperrklinke gegen den Schwenkhebel anliegt ergibt sich ein Vorteil der Erfindung, nämlich der, dass ein Verriegeln der Tankklappe bei noch geöffneter Tankklappe erfolgen kann. Wird die Verriegelung bei noch geöffneter Tankklappe aktiviert, so verfährt ein Antrieb die Sperrklinke in eine Position, in der die Sperrklinke eine Bewegung des Schwenkhebels nicht blockiert, sondern gegen eine Fläche des Schwenkhebels anliegt. Die Verriegelung ist in diesem Zustand aktiv, die Tankklappe aber geöffnet. Erst nach einem Schließen der Tankklappe verfährt der Schwenkhebel in eine Position, in der die Sperrklinke eine Bewegung des Schwenkhebels blockiert. Bevorzugt wirkt ein freies Ende des Schwenkhebels mit einer Ausnehmung in der Sperrklinke zusammen.

Eine weitere vorteilhafte Ausführungsform der Erfindung sieht vor, dass die Verriegelung mit einer Detektionsvorrichtung für den Öffnungszustand der Tank- oder Ladeklappe ausgerüstet ist. Über diese Detektionsvorrichtung kann festgestellt werden, ob die Tank- oder Ladeklappe geöffnet oder geschlossen ist. In Verbindung mit einer optischen und/oder akustischen Anzeige, die gegebenenfalls mit einer Alarmfunktion ausgerüstet ist und zum Beispiel in das Armaturenbrett des Fahrzeugs integriert ist, kann dem Fahrer somit signalisiert werden, ob die Klappe geöffnet oder geschlossen ist, insbesondere ob er unbeabsichtigt mit geöffneter oder nicht vollständig geschlossener Klappe losgefahren ist.

Dabei ist etwa im Rahmen einer vergleichsweise kostengünstigen Umsetzung daran gedacht, dass als Detektionsvorrichtung ein Schaltmittel dient, das die Position des Riegelbolzens und/oder des Schwenkhebels erfasst. Über das etwa als Mikroschalter ausgebildete Schaltmittel kann direkt oder indirekt insbesondere realisiert werden, ob der Riegelbolzen sich in der eingefahrenen oder ausgefahrenen Position befindet. Dessen Positionswechsel gehen bekanntlich mit einer Verdrehung des Riegelbolzens und damit auch des Schwenkhebels in Folge der Betätigung der Tankklappe einher, sodass sich eben über eine Erfassung der Position von Riegelbolzen und/oder Schwenkhebel durch das Schaltmittel darauf schließen lässt, ob die Tankklappe geöffnet oder geschlossen ist. Hier zu ist zum Beispiel der Schwenkhebel korrespondierend zu dem Schaltmittel ausgebildet. Nach einer Ausführung weist der Schwenkhebel in dem dem Schaltmittel zugewandten Bereich einen Vorsprung auf, über den das Schaltmittel betätigt wird.

Eine Alternative zu solch einem Schaltmittel sieht vor, dass als Detektionsvorrichtung ein Hallsensor in Zusammenwirken mit einem Permanentmagneten dient. Über den Hallsensor wird die Bewegung des Permanentmagneten erfasst. Darauf erfolgt eine entsprechende Signalgebung, die in Zusammenhang mit der vorliegenden Erfindung Aufschluss über den Öffnungszustand der Tankklappe gibt. Dabei liegt ein Vorteil des Hallsensors im Zusammenspiel mit dem Permanentmagneten in der berührungslosen Funktionsweise zwischen Sensor und Magnet.

Dies ist insbesondere der Fall, wenn der Hallsensor oder der Permanentmagnet dem Riegelbolzen und/oder dem Schwenkhebel zugeordnet ist. Die Position des Riegelbolzens beziehungsweise des Schwenkhebels gibt, wie oben bereits beschrieben, Aufschluss über den Öffnungszustand der Tankklappe, sodass die Abfrage des Riegelbolzens und/oder des Schwenkhebels besonders vorteilhaft ist, zumal dies in geschützter Form in dem Gehäuse der Verriegelung stattfinden kann.

Diese Steuerung kann auch auf andere Weise vorteilhaft ausgenutzt werden, wenn nämlich die Detektionsvorrichtung mit einer im Bereich der Tankklappe angeordneten Leuchteinheit korrespondiert. Weil über die Detektionsvorrichtung erfasst werden kann, ob die Tankklappe gerade geöffnet und eine Ausbuchtung des diese umgebenden Bereichs somit sinnvoll ist, kann über die Detektionsvorrichtung auch die Leuchteinheit gesteuert werden, deren Schaltung zum Beispiel über Stanzgitter in das Anzeigesystem integriert ist. Dies vereinfacht gerade bei ungünstigen Sichtverhältnissen das Tanken beziehungsweise Wiederaufladen der Batterie von Elektrofahrzeugen. Die Leuchteinheit kann ergänzend oder alternativ auch dazu dienen, zum Beispiel über den Ladezustand, speziell in Zusammenhang mit einer solchen Batterie, Auskunft zu gegeben. Dies bedeutet, dass dem Fahrer bei geöffneter Tankklappe der Ladezustand der Batterie angezeigt werden kann.

Die Erfindung zeichnet sich insbesondere dadurch aus, dass eine Verriegelung für eine Tank- oder Ladeklappe in einem Fahrzeug geschaffen ist, die sowohl was Anzahl als auch Dimensionierung der notwendigen Bauteile betrifft, mit einem Minimum auskommt. Maßgeblich hierfür ist ein zwischen einer ausgefahrenen Öffnungs- und einer eingefahrenen Schließposition verstellbarer Riegelbolzen, der über eine Kulisse gegenüber dem Gehäuse der Verriegelung zwangsgeführt ist. Hierzu dient, bezogen auf den Riegelbolzen eine in sich geschlossene, rundum laufende Kulisse und bezogen auf das Gehäuse ein in dieser Kulisse geführter Stift. In einem Zusammenspiel zwischen einer Torsions- und einer Druckfeder wird über die Zwangsführung der Lauf des Stiftes in der Kulisse gesteuert und die Rückkehr in die Ausgangsposition gewährleistet. Diagonal angeordnete Abschnitte der Kulisse werden gegen die Kraft von Torsions- und Druckfeder bewältigt, horizontale Abschnitte ausschließlich gegen die Torsions- und vertikale Abschnitte ausschließlich gegen die Druckfeder. Der Torsionsfeder kommt dabei die Bedeutung zu, eine Vorspannung in beide Wirkrichtungen in und gegen den Uhrzeigersinn auszuüben, dies jeweils am oberen und unteren Ende der Kulisse im Bereich der dort positionierten Übergänge. Unter Ladeklappen sind insbesondere Abdeckungen für Ladebuchsen in einem Elektrofahrzeug zum Nachladen von Batterien zu verstehen, die alternativ zu Tankdeckeln bei Elektrofahrzeugen zum Einsatz kommen. Die erfindungsgemäße Verriegelung kann auch zum Verriegeln der Verbindungen zwischen Ladestecker und Ladesteckdose beim Ladevorgang eines Elektrofahrzeugs verwendet werden.

Weitere Einzelheiten und Vorteile des Erfindungsgegenstandes ergeben sich aus der nachfolgenden Beschreibung der zugehörigen Zeichnung, in der ein bevorzugtes Ausführungsbeispiel mit den dazu notwendigen Einzelheiten und Einzelteilen dargestellt ist. Es zeigen:
- Figur 1: den Blick in das Gehäuse der Verriegelung mit dem Riegelbolzen im geöffneten Zustand,
- Figur 2: die Darstellung gemäß Figur 1 mit dem Riegelbolzen im geschlossenen Zustand,
- Figur 3: das Riegelwerk in geschlossenem Zustand mit Riegelbolzen in Schließstellung,
- Figur 4: das Riegelwerk in unverschlossenem Zustand mit Riegelbolzen in Schließstellung,
- Figur 5: das Riegelwerk im geschlossenen Zustand mit Riegelbolzen in Schließstellung,
- Figur 6: das Riegelwerk in unverschlossenem Zustand mit Riegelbolzen in Öffnungsstellung,
- Figur 7: einen Riegelbolzen mit Kulisse,
- Figur 8: ein Schema für die Verstellung des Riegelbolzens,
- Figur 9: einen Schließbolzen mit Schwenkhebel
- Figur 10: die Draufsicht in das Gehäuse mit Torsionsfeder bei Riegelbolzen in Öffnungsstellung,
- Figur 11: die Darstellung gemäß Figur 9 bei Riegelbolzen in Schließstellung,
- Figur 12: das Gehäuse der Verriegelung mit einem Mikroschalter bei geschlossener Tank- oder Ladeklappe,
- Figur 13: das Gehäuse der Verriegelung mit einem Mikroschalter bei geöffneter Tank- oder Ladeklappe,
- Figur 14: das Gehäuse der Verriegelung mit Hallsensor bei geöffneter Tank- oder Ladeklappe,
- Figur 15: das Gehäuse der Verriegelung mit Hallsensor bei geschlossener Tank- oder Ladeklappe,
- Figur 16: ein Schema für die Verstellung des Riegelbolzens mit Sicherung und
- Figur 17: einen Riegelbolzen mit Kulisse mit Sicherung.

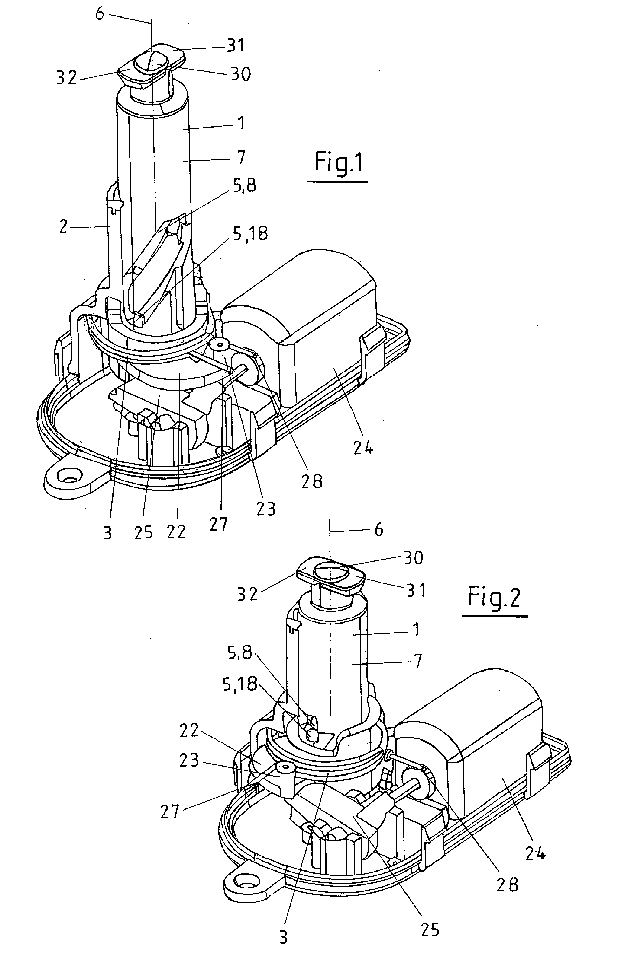

Figur 1 zeigt den Blick auf das Innenleben einer Verriegelung mit einem Riegelbolzen 1 in geöffneter Stellung. Von dem Gehäuse 2 ist nur ein mit einem entsprechenden Bezugszeichen versehener Teil zur besseren Veranschaulichung gezeigt. Der Riegelbolzen 1 weist auf seiner Mantelfläche 7 eine Kulisse 5 auf, welche im Zusammenspiel mit dem Stift 18 als Zwangsführung 8 zwischen Riegelbolzen 1 und Gehäuse 2 dient. Zur funktionalen Ergänzung ist eine Torsionsfeder 3 vorgesehen, welche den Riegelbolzen 1 im Bereich eines Schwenkhebels 22 umgibt. Mit dem Bezugszeichen 24 ist der Antrieb in Form eines Motors für die Sperrklinke 25 bezeichnet, über die der Riegelbolzen 1, genauer gesagt der Schwenkhebel 22 in der verriegelten Stellung gegen weitere Betätigung gesichert ist. Zwei Schenkel 27, 28 dienen zur Abstützung der Torsionsfeder 3 zum Aufbau einer Vorspannung in Zusammenhang mit dem Anschlag 23 auf dem Schwenkhebel 22. Nicht gezeigt ist eine mögliche Notenriegeiung

In der Darstellung gemäß Figur 2 wurde der Riegelbolzen 1 in seine Schließstellung gebracht, sprich in Richtung seiner Längsachse 6 nach unten gedrückt. Bewerkstelligt wurde dies über die hier nicht erkennbare Tank- oder Ladeklappe, mit welcher der Riegelbolzen 1 an seinem oberen Ende 29 in Kontakt steht. Verantwortlich hierfür ist der Mechanismus 30 mit den beiden Flügeln 31 und 32, über den der Riegelbolzen 1 mit der Tank- oder Ladeklappe in Eingriff steht. Wird letztere geschlossen, kommt es zu einer Verschiebung des Riegelbolzens 1 in Längsachsenrichtung 6 und um diese Achse 6 zu einer gleichzeitigen Verdrehung in die in Figur 2 dargestellte Position. Erkennbar ist dabei auch, dass die Torsionsfeder 3, genauer gesagt die Schenkel 27 und 28 ihre Positionen geändert haben; die Vorspannung ist jetzt über den Schenkel 27 gegen den Uhrzeigersinn aufgebaut.

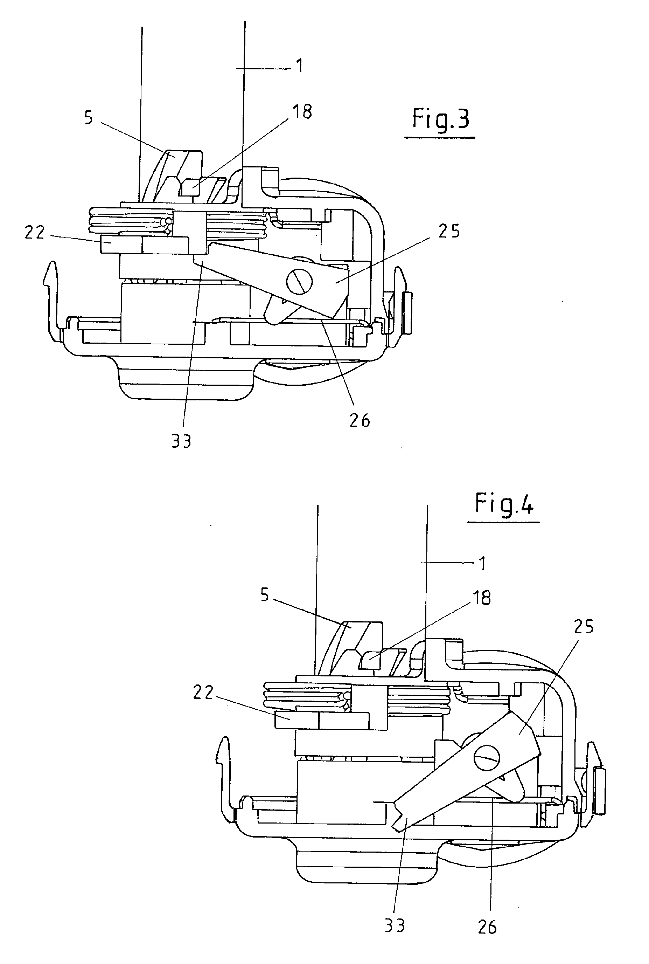

Die Figuren 3 bis 6 stellen mit den erfindüngsgemäßen Verriegelungsmechanismus in vier verschiedenen Positionen dar. In Figur 3 ist zunächst das Riegelwerk bei geschlossener Tank- oder Ladeklappe und Riegelbolzen 1 in der eingefahrenen Schließstellung gezeigt. Erkennbar ist die über den hier verdeckten Antrieb steuerbare Sperrklinke 25, die an ihrem vorderen Ende 33 den Schwenkhebel 22 und damit den Riegelbolzen 1 blockiert; die Verriegelung ist geschlossen. Dabei stützt sich die Sperrklinke 25 auf der Feder 26 ab beziehungsweise wird die Sperrklinke 25 mittels der Kraft der Feder 26 unter Spannung gehalten. Der Stift 18 befindet sich im oberen Bereich der Kulisse 5.

In der Darstellung gemäß Figur 4 nun ist die Verriegelung nicht geschlossen, der Riegelbolzen 1 befindet sich aber auch in der unteren Schließposition. Allerdings ist die Sperrklinke 25 nicht mit dem Schwenkhebel 22 in Eingriff, sodass diesbezüglich kein Widerstand mehr erfolgt; die Verriegelung ist bei einem Riegelbolzen 1 in der Schließposition nicht verschlossen. Der Stift 18 befindet sich im oberen Bereich der Kulisse 5.

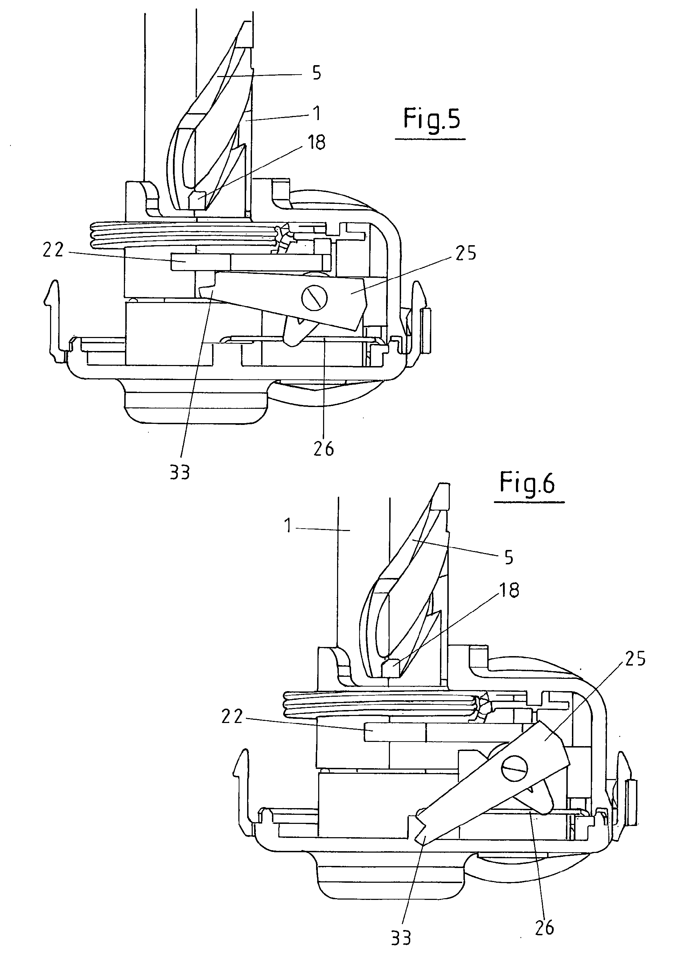

Figur 5 zeigt eine verschlossene Riegelung, allerdings mit einem Riegelbolzen 1 in seiner oberen Öffnungsposition, die Klappe ist also bei verschlossener Verriegelung geöffnet. Zwar befindet sich die Sperrklinke 25 in der Position, wie sie im Grunde Figur 3 entspricht, was allerdings angesichts des geöffneten Riegelbolzens 1 praktisch wirkungslos ist. Der Stift 18 befindet sich am unteren Bereich der Kulisse 5.

Schließlich zeigt Figur 6 das Riegelwerk bei geöffneter Verriegelung und einem sich in der oberen Öffnungsposition befindlichen Riegelbolzen 1. Erst nach einem ISchließen der Klappe, bei der der Riegelbolzen 1 betätigt wird, kann die Sperrklinke 25 in Eingriff mit dem Schwenkhebel 22 gelangen. Während des Schließens führt der Schwenkhebel 22 eine Drehbewegung aus und die Sperrklinke 25 gleitet am Schwenkhebel 22 vorbei, bis die Sperrklinke 25 an ein freies Ende des Schwenkhebels 22 gelangt und einrastet. In der Eingerasteten Stellung verriegelt die Sperrklinke 25 dann den Schwenkhebel 22, so dass die geschlossene Tankklappe verriegelt ist. Der Stift 18 befindet sich am unteren Bereich der Kulisse 5.

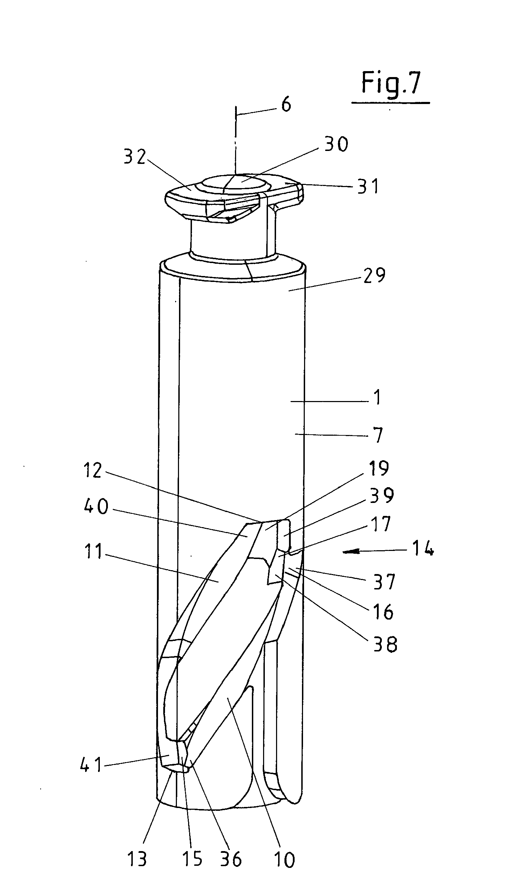

Gegenstand von Figur 7 ist der Verriegelungsbolzen 1 mit dem Mechanismus 30 und den beiden Flügeln 31, 32 an seinem oberen Ende 29 und der in sich geschlossenen Kulisse 5 an der Mantelfläche 7 des Riegelbolzens 1. Mit den Bezugszeichen 36 bis 41 sind sechs Positionen an beziehungsweise in der Kulisse 5 veranschaulicht, wie sie in Zusammenspiel mit dem hier nicht dargestellten gehäuseseitigen Stift die bolzenseitige Zwangsführung 8 darstellen. Mit 36 ist die unterste Position am unteren Ende 13 der Kulisse 5 bezeichnet. Befindet sich der Stift dort, ist der Riegelbolzen 1 in seiner Öffnungsstellung, ist also ausgefahren. Passiert dieser nun bei Betätigung des Riegelbolzens 1 den diagonalen Abschnitt 10, gelangt er zunächst in die Position 37, die er durch Betätigung gegen die Kraft der Torsions- und der Druckfeder erreicht. Gegen die Kraft letzterer gelangt der Stift dann über den horizontalen Abschnitt 16 im Bereich des Übergangs 14 in die Position 38; der Schließbolzen 1 ist nun in seiner Schließposition, also eingefahren. Von dort gelangt der Stift über den vertikalen Abschnitt 17 des Übergangs 14 gegen die Kraft der Druckfeder in die Position 39 am oberen Ende 12 der Kulisse 5; diese Position erreicht der Stift, wenn eine Kraft auf die geschlossene Tankklappe ausgeübt wird, das heißt die Tankklappe aus ihrer geschlossenen Position in Richtung Fahrzeug betätigt wird. Daran schließt sich wiederum ein horizontaler Abschnitt 19 an, an dessen Ende sich die Position 40 befindet. Von dort gelangt der Stift über den dem ersten diagonalen Abschnitt 10 gegenüberliegenden zweiten diagonalen Abschnitt 11 in die untere Position, die mit dem Bezugszeichen 41 bezeichnet ist und die wiederum einem Schließbolzen in der Öffnungsstellung entspricht. Dort, am unteren Ende der Kulisse 5 ist wiederum ein horizontaler Übergang 15 zwischen den Punkten 36 und 41 bezeichnet.

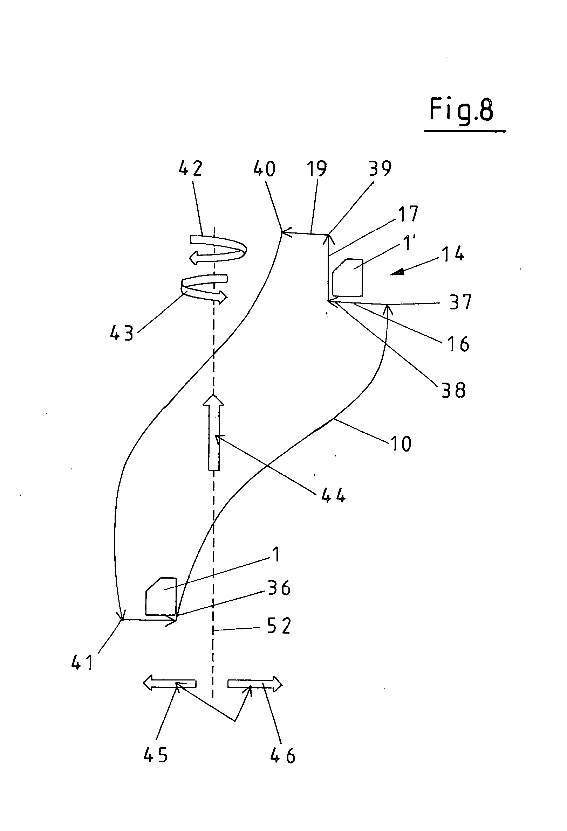

Veranschaulicht werden soll dieser Mechanismus ergänzend durch Figur 8. Die erste, mit 36 bezeichnete Position entspricht einem geöffneten Riegelbolzen 1, beziehungsweise einer geöffneten Klappe. Daran schließt sich der diagonale Abschnitt 10 bis zur Position 37 an. Aus dieser gelangt der Stift über den Übergang 14 in die Schließposition 38. Dieser Übergang 14, symbolisiert durch das Bezugszeichen 1' für den in der Schließstellung befindlichen Riegelbolzen besteht zunächst aus einem horizontalen Abschnitt 16 zwischen den Punkten 37 und 38, einem sich daran anschließenden vertikalen Abschnitt 17 zwischen den Punkten 38 und 39 und schließlich einem weiteren horizontalen Abschnitt 19 zwischen den Punkten 39 und 40. Daran schließt sich zwischen den Punkten 40 und 41 wiederum ein diagonaler Abschnitt 11 an, welchen der Stift bei der durch die Federn unterstützten Rückkehr passiert. Zwischen den Punkten 41 und 36 wiederum befindet sich ein horizontaler Übergang 15. Mit den Pfeilen 42, 43 ist die Rotation des Riegelbolzens 1 um die Längsachse bezeichnet, mit dem Pfeil 44 die Kraft der Druckfeder und mit den Pfeilen 45 und 46 die Kraft, welche die Torsionsfeder 3 aufbringt. Die sich in der Mitte zwischen den Pfeilen 45 und 46 befindende gestrichelte Linie stellt eine Nulllinie der Kraft der Torsionsfeder 3 dar. Im Bereich der gestrichelten Linie wirkt keine Kraft von der Torsionsfeder 3 auf den Schwenkhebel 22. Deutlich zu erkennen ist, dass mittels der Torsionsfeder 3 eine Kraft in unterschiedliche Richtungen erzielbar ist, das heißt die Torsionsfeder 3 erzeugt einmal eine Kraft im Uhrzeigersinn und einmal eine Kraft gegen den Uhrzeigersinn, mit anderen Worten kann die Torsionsfeder 3 eine Kraft in positive und negative Richtung erzeugen, je nachdem in welcher Position sich der Riegelbolzen 1 befindet.

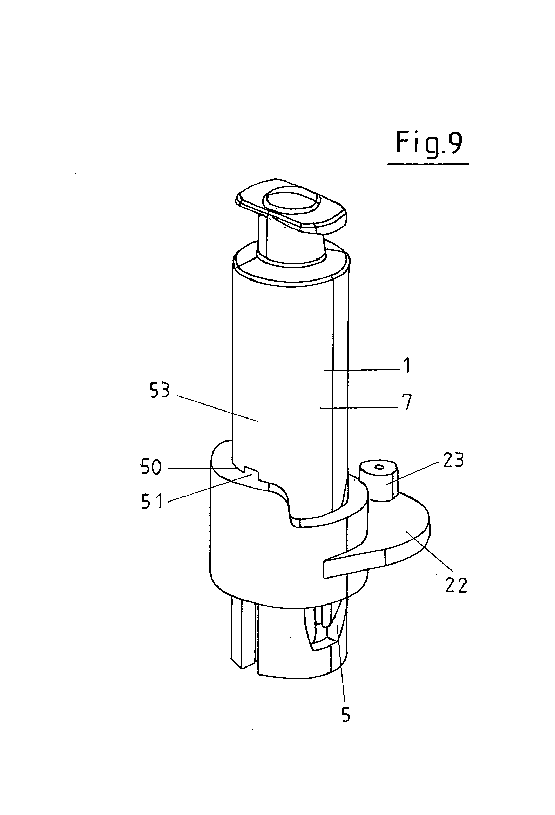

Figur 9 zeigt einen Riegelbolzen 1 mit Schwenkhebel 22, wobei diese Darstellung die durch Riegelbolzen 1 und Schwenkhebel 22 gebildete Baueinheit veranschaulicht. Der Schwenkhebel 22 dient mit seinem Anschlag 23 insbesondere zur Übertragung des über den Riegelbolzen 1 ausgeübten Drehmoments auf die hier nicht dargestellte Torsionsfeder 3. Eine Kraftübertragung vom Schwenkhebel 22 in Richtung auf den Riegelbolzen 1 oder umgekehrt erfolgt beispielhaft über die dargestellte formschlüssige Verbindung in Form einer Nut 50 und Riegel 51 Verbindung an dem dem Anschlag diametral gegenüberliegenden Ende 53 des Riegelbolzens 1.

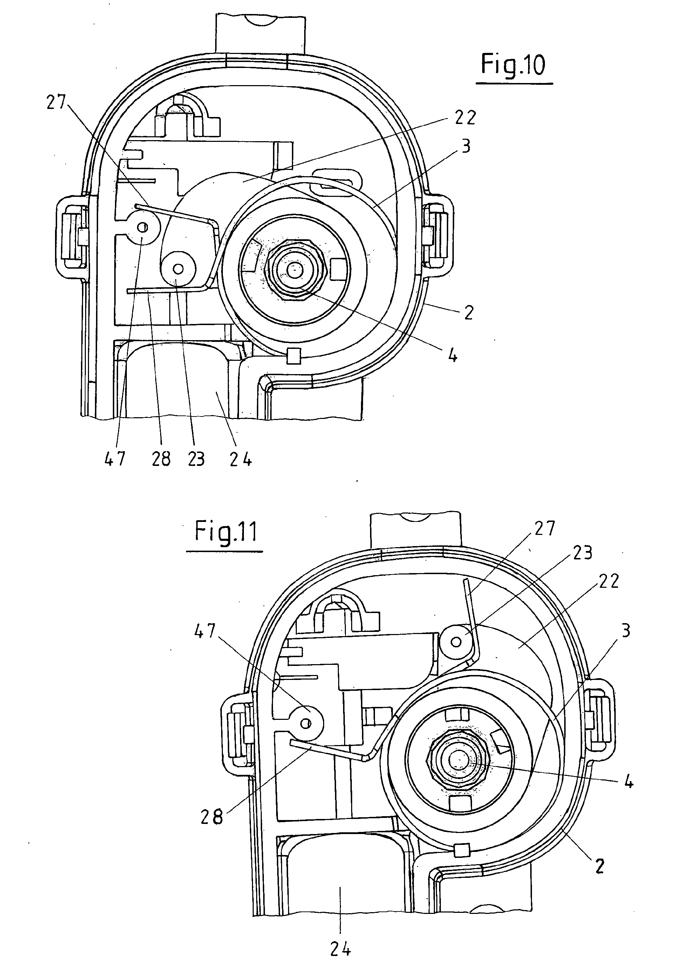

Die Funktion der Torsionsfeder 3 wird in den Darstellungen aus Figur 10 und 11 zusätzlich erläutert. Zunächst zeigt Figur 10 das Riegelwerk in der Öffnungsstellung des hier nicht dargestellten Riegelbolzens. Die Torsionsfeder 3 ist im Uhrzeigersinn vorgespannt, zwischen ihren beiden Schenkeln 28 und 27 ist der Anschlag 23 auf dem Schwenkhebel 22 zu erkennen. Mit 4 ist die im unteren Bereich des Riegelbolzens 1 angeordnete Druckfeder 4 bezeichnet.

Dies hat sich nun in der Darstellung gemäß Figur 11 geändert, durch Betätigung des Riegelbolzens 1 hat sich auch der Schwenkhebel 22 samt Anschlag 23 gedreht, wobei der Anschlag 23 den Schenkel 27 gegen die Kraft der Torsionsfeder 3 mitgenommen hat, wobei es gleichzeitig ein gehäuseseitiger Anschlag 47 der Torsionsfeder 3 ermöglicht, die entsprechende Vorspannung gegen den Uhrzeigersinn aufzubauen. Dank dieser Anordnung und Ausbildung der Torsionsfeder 3 ist stets die Rückkehr des Riegel- oder Schließbolzens 1 in die Öffnungsstellung in Zusammenspiel mit der Druckfeder 4 und der als Hysterese beschreibbaren Kulisse 5 möglich.

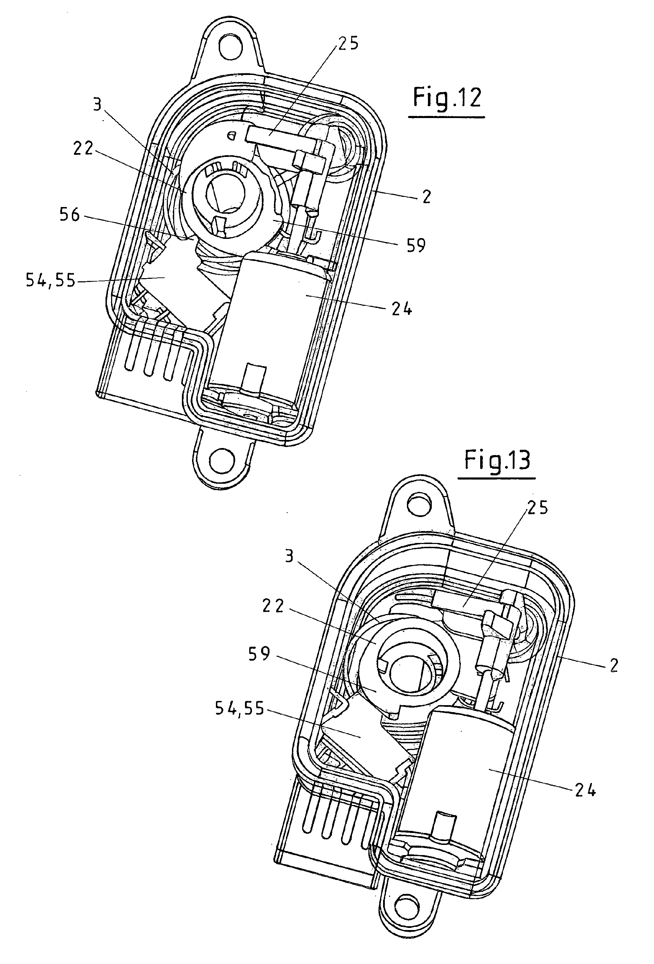

Gegenstand von Figur 12 ist der Blick in das Gehäuse 2 der Verriegelung. Dabei wurde auf die Darstellung des Riegelbolzens verzichtet, erkennbar ist aber der Schwenkhebel 22. Diesem ist das als Detektionsvorrichtung 54 dienende Schaltmittel 55, ein Mikroschalter, zugeordnet. Die hier wiedergegebene Positionierung bedeutet, dass die Tank- oder Ladeklappe geschlossen ist, folglich befindet sich der hier nicht dargestellte Verriegelungsbolzen samt Schwenkhebel 22 in der eingefahrenen, heruntergedrückten Position. Der Schwenkhebel 22 befindet sich in der Darstellung gemäß Figur 12 in einer Position, in welcher der Schalter 56 nicht betätigt ist.

Anders in der Darstellung nach Figur 13, hier ist die Klappe geöffnet, der nicht dargestellte Verriegelungsbolzen befindet sich in der ausgefahrenen Position. Der Schwenkhebel 22 weist einen Vorsprung 59 auf, das heißt der Schwenkhebel 22 steht in dem Bereich des Vorsprungs 59 etwas über, sodass es bei der Drehung, zu der es zwischen den Darstellungen gemäß Figur 12 und 13 gekommen ist, zu einem Kontakt mit dem hier eingedrückten Schalter 56 der als Schaltmittel 55 ausgebildeten Detektionsvorrichtung 54 gekommen ist.

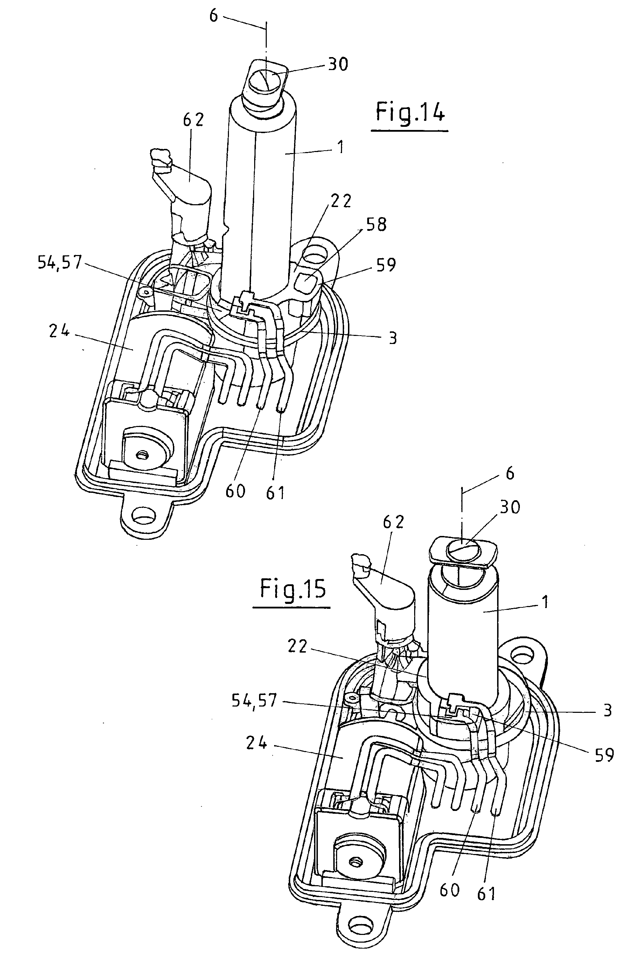

Figur 14 zeigt die alternative Lösung mit einer durch einen Hallsensor 57 und einen Permanentmagneten 58 gebildeten Detektionsvorrichtung 54. In der Darstellung gemäß Figur 14 ist der Riegelbolzen 1 in der ausgefahrenen Position dargestellt; die hier nicht dargestellte Tankklappe ist geöffnet. Zwischen dem Hallsensor 57 und dem in den Vorsprung 59 des Schwenkhebels 22 integrierten Permanentmagneten 58 besteht kein Kontakt.

Dies hat sich in der Darstellung gemäß Figur 15 geändert. Die nicht erkennbare Tank- oder Ladeklappe ist geschlossen, das heißt der Riegelbolzen 1 befindet sich in seiner eingefahrenen Position, nachdem er sich dabei um seine Längsachse 6 gedreht hat. Dies hat dazu geführt, dass der Schwenkhebel 22 sich mitgedreht hat, der Permanentmagnet 58 ist durch den Hallsensor 57 weitestgehend verdeckt. Der Hallsensor 57 erfasst also durch die Lokalisierung des Magneten 58 das Verstellen des Riegelbolzens 1 zwischen dessen ausgefahrener und dessen eingefahrener Position, wobei sich solch ein berührungsloses Zusammenspiel zwischen dem Hallsensor 57 und dem Permanentmagneten 58 als Detektionsvorrichtung 54 besonders eignet, wenn eine vergleichsweise klein bauende Detektionsvorrichtung benötigt wird. Mit dem Bezugszeichen 62 ist noch eine mechanische Notentriegelung bezeichnet. Gezeigt sind außerdem Stanzgitter 60 und 61, wie sie zum Beispiel zur Steuerung von hier nicht dargestellten Leuchtmitteln im Bereich der Öffnung der Klappe über die Position des Riegelbolzens 1 dienen. Der Einsatz der Beleuchtungsmittel kann damit auf die Zustände beschränkt werden, in denen die Tankklappe 14 geöffnet und der Riegelbolzen 1 sich in seiner ausgefahrenen Position befindet, wie es Figur 14 zeigt.

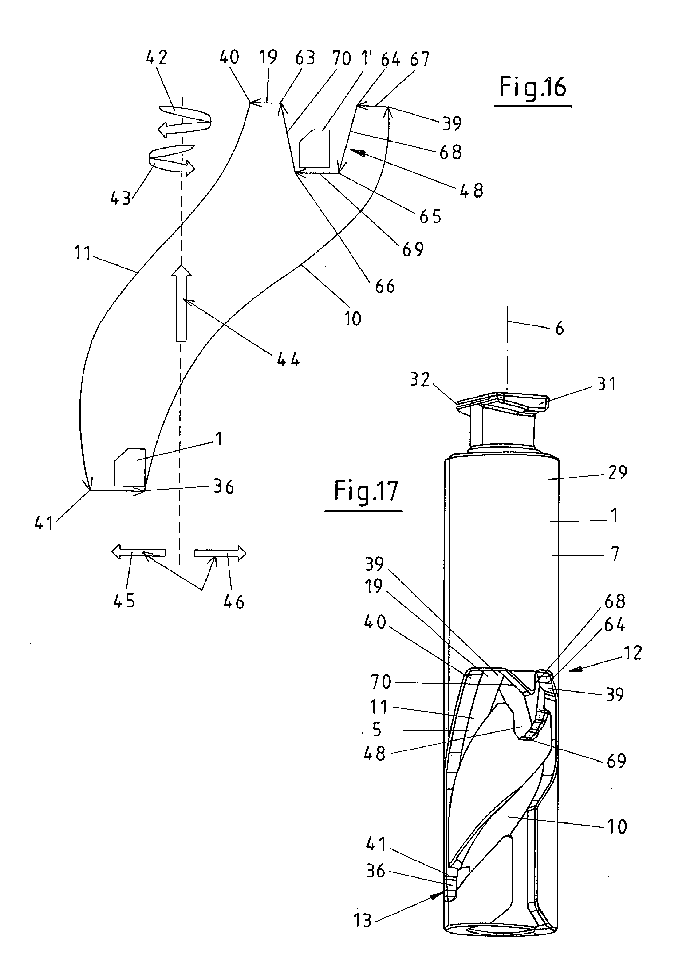

In einer alternativen Darstellung zu Figur 8 zeigt Figur 16 die Veranschaulichung des Mechanismus beider Verstellung des Riegelbolzens 1, hier mit dem zur Sicherung dienenden zusätzlichen Kulissenabschnitt 48. Mit den Bezugszeichen 36, 39, 64, 65, 66, 63, 40 und 41 sind insgesamt acht Positionen an der Kulisse 5 veranschaulicht, wie sie in Zusammenspiel mit dem hier nicht dargestellten gehäuseseitigen Stift die bolzenseitige Zwangsführung darstellen. Die Position am unteren Ende der Kulisse 5 ist mit 36 bezeichnet. Passiert der Stift nun bei Betätigung des Riegelbolzens 1 aus der ausgefahrenen Öffnungsstellung in die eingefahrene Schließstellung den diagonalen Abschnitt 10, gelangt er in die Position 39 und zwar durch Betätigung gegen die Kraft der Torsions- und der Druckfeder. Nur gegen die Kraft letzterer gelangt der Stift dann in Pfeilrichtung 67 an den mit dem Bezugszeichen 64 bezeichnenden Punkt. Dort beginnt der Kulissenabschnitt 48 zur Sicherung einer Halteposition des Riegelbolzens in seinem geschlossenen Zustand. Die Passage dieses Kulissenabschnitts ist symbolisiert durch die Pfeile 68, 69 und 70. In etwa weist der Kulissenabschnitt 48 eine V-förmige Form auf, wobei die beiden Schenkel 70 und 68 des Kulissenabschnitts 48 über einen horizontalen Abschnitt 69 noch miteinander verbunden sind. Offensichtlich wird in dieser Darstellung, dass es praktisch ausgeschlossen ist, dass der Stift den wannenartigen Kulissenabschnitt 48 verlässt, sofern der Riegelbolzen 1 nicht in entsprechender Weise bewusst betätigt wird. Nicht dargestellt ist, dass der Stift von der Position 64 in die Position 65 im Wesentlichen durch die Unterstützung zum Beispiel einer Gummidichtung an der Tank- oder Ladeklappe gelangt. Dabei gelangt der Riegelbolzen 1 dann in Pfeilrichtung 66 von der Stellung 65 in die Stellung 66 über die Torsionsfeder.

Den Riegel mit Sicherheitsabschnitt selbst zeigt Figur 17. Auch hier sind insgesamt 8 Positionen mit dem Bezugszeichen 36, 39, 64, 65, 66, 63, 40 und 41 bezeichnet. Passiert der nicht dargestellte Stift beim Einfahren des Riegelbolzens den diagonalen Abschnitt, gelangt dieser zunächst in die Position 39 und dann über den horizontalen Abschnitt 67 in die Position 64. Es schließt sich der Kulissenabschnitt 48 zur Sicherung an, bestehend aus den beiden V-förmig zueinander angeordneten Flanken 68 und 70, verbunden durch einen weiteren horizontalen Abschnitt 69, welche die gesicherte Schließposition darstellt. Schließen sich an die Flanke 70 des Kulissenabschnitts 48 die Positionen 63 und 40 an, verbunden über den horizontalen Abschnitt 19, bis der Stift dann über die Diagonale 11 wieder in die Position 41 am unteren Ende 13 der Kulisse 5 gelangt.

## Patentansprüche

1. Verriegelung für eine Tank- oder Ladeklappe in einem Fahrzeug, mit einem durch Öffnen und Schließen der Tank- oder Ladeklappe zwischen einer Öffnungs- und einer Schließposition verstellbaren Riegeibolzen (1), wobei der Riegelbolzen (1) in dem Gehäuse (2) der Verriegelung in Richtung seiner Längsachse (6) gegen die Kraft einer Druckfeder (4) zwangsgeführt ist, **dadurch gekennzeichnet, dass** der Riegelbolzen um seine Längsachse (6) zusätzlich gegen die Kraft einer Torsionsfeder (3) zwangsgeführt ist, wobei mittels der Torsionsfeder (3) die Kraft in unterschiedliche Richtungen (45, 46) erzielbar ist, und zwar einmal im Uhrzeigersinn und einmal gegen den Uhrzeigersinn.

2. Verriegelung nach Anspruch 1,
**dadurch gekennzeichnet,**
**dass** in Bezug auf den Riegelbolzen (1) als Zwangsführung (8) auf dessen Mantelfläche (7) eine in sich geschlossene Kulisse (5) dient und/oder dass in Bezug auf das Gehäuse (2) als Zwangsführung (8) ein in der bolzenseitigen Kulisse (5) geführter Stift (18) dient.

3. Verriegelung nach Anspruch 2,
**dadurch gekennzeichnet,**
**dass** die Kulisse (5) zwei gegenüberliegende, im Wesentlichen diagonal verlaufende Abschnitte (10, 11) aufweist.

4. Verriegelung nach Anspruch 3,
**dadurch gekennzeichnet,**
**dass** zwischen den beiden diagonal verlaufenden Abschnitten (10, 11) ein zur Sicherung einer Halteposition des Riegelbolzens (1) in dessen Schließposition dienender Kulissenabschnitt (48) am oberen Ende (12) der Kulisse (5) vorgesehen ist.

5. Verriegelung nach Anspruch 4,
**dadurch gekennzeichnet,**
**dass** der Kulissenabschnitt (48) im Wesentlichen V-förmig ausgebildet ist.

6. Verriegelung nach Anspruch 3, **dadurch gekennzeichnet, dass** die diagonal verlaufenden Abschnitte (10, 11) am oberen Ende (12) und/oder am unteren Ende (13) der Kulisse (5) durch einen Übergang (14, 15), vorzugsweise einen Übergang (14) mit einem horizontal verlaufenden Abschnitt (16) und/oder einem vertikal verlaufenden Abschnitt (17, 19) verbunden sind.

7. Verriegelung nach Anspruch 1,
**dadurch gekennzeichnet,**
**dass** die Ausbildung und/oder Lagerung der Torsionsfeder (3) in dem Gehäuse (2) der Verriegelung das Ausüben einer Vorspannung in beide Wirkrichtungen der Torsionsfeder (3) ermöglicht.

8. Verriegelung nach Anspruch 7,
**dadurch gekennzeichnet,**
**dass** die Torsionsfeder (3) sich an dem Gehäuse (2) der Verriegelung und dem Riegelbolzen (1) und/öder einem fest mit dem Riegelbolzen (1) verbundenen Schwenkhebel (22) abstützend ausgebildet ist.

9. Verriegelung nach Anspruch 1,
**dadurch gekennzeichnet,**
**dass** zum Verriegeln der Tank- oder Ladeklappe eine mit einem Antrieb (24) versehene Sperrklinke (25) dient, die bei verriegelter Tank- oder Ladeklappe den Schwenkhebel (22) blockiert oder am Schwenkhebel (22) anliegt.

10. Verriegelung nach Anspruch 9,
**dadurch gekennzeichnet,**
**dass** die Sperrklinke (25) durch eine Feder (26) in der Schließstellung gehalten ist.

11. Verriegelung nach Anspruch 1,
**dadurch gekennzeichnet,**
**dass** die Verriegelung mit einer Detektionsvorrichtung (54) für den Öffnungszustand der Tank- oder Ladeklappe ausgerüstet ist.

12. Verriegelung nach Anspruch 11,
**dadurch gekennzeichnet,**
**dass** als Detektionsvorrichtung (54) ein Schaltmittel (55) dient, das die Position des Riegelbolzens (1) und/oder des Schwenkhebels (22) erfasst.

13. Verriegelung nach Anspruch 12,
**dadurch gekennzeichnet,**
**dass** als Detektionsvorrichtung (54) ein Hallsensor (57) in Zusammenwirken mit einem Permanentmagneten (58) dient, wobei der Hallsensor (57) oder der Permanentmagnet (58) dem Riegelbolzen (1) und/oder dem Schwenkhebel (22) zugeordnet ist.

## Claims

1. A lock for a fuel tank cap or a tailgate of a vehicle, comprising a latch bolt (1) which can be shifted between an opening and a closing position by opening and closing the fuel tank cap or the tailgate, wherein the latch bolt (1) is guided under force in the direction of the longitudinal axis (6) thereof against the force of a compression spring (4) in the housing (2) of the lock, **characterized in that** the latch bolt is additionally guided under force around the longitudinal axis thereof against the force of a torsion spring (3), wherein the force can be obtained in different directions (45, 46) by means of the torsion spring (3), namely clockwise and counter-clockwise.

2. A lock according to claim 1,
**characterized in**
**that** concerning the latch bolt (1) a block guide (5) closed in itself and located on the shell surface (7) of the latch bolt serves as forced guidance (8) and/or that concerning the housing (2) a pin (18) guided in the block guide (5) on the side of the bolt serves as forced guidance (8).

3. A lock according to claim 2,
**characterized in**
**that** the block guide (5) comprises two sections (10, 11) which are located opposite each other and which essentially extend diagonally.

4. A lock according to claim 3,
**characterized in**
**that** between the two sections extending diagonally (10, 11) there is provided a block guide section (48) at the upper end (12) of the block guide (5) for securing a hold position of the latch bolt (1) in the closed position thereof.

5. A lock according to claim 4,
**characterized in**
**that** the block guide section (48) is essentially V-shaped.

6. A lock according to claim 3,
**characterized in**
**that** at the upper end (12) and/or at the lower end (13) of the block guide (5), the diagonally extending sections (10, 11) are connected to a horizontally extending section (16) and/or a vertically extending section (17, 19) via a transition (14, 15), preferably a transition (14).

7. A lock according to claim 1,
**characterized in**
**that** the provision and/or accommodation of the torsion spring (3) in the housing (2) of the lock enables to exert a preload in both effective directions of the torsion spring (3).

8. A lock according to claim 7,
**characterized in**
**that** the torsion spring (3) is configured such that it rests against the housing (2) of the lock and the latch bolt (1) and/or against a pivot lever (22) firmly connected to the latch bolt (1).

9. A lock according to claim 1,
**characterized in**
**that** a ratchet (25) provided with a drive (24) serves to lock the fuel tank cap or tailgate, which ratchet blocks the pivot lever (22) or rests against the pivot lever (22) if the fuel tank cap or tailgate is locked.

10. A lock according to claim 9,
**characterized in**
**that** the ratchet (25) is held in the closed position by a spring (26).

11. A lock according to claim 1,
**characterized in**
**that** the lock is equipped with a detection device (54) for detecting the open state of the fuel tank cap or tailgate.

12. A lock according to claim 11,
**characterized in**
**that** a switching device (55) serves as detection device (54) which detects the position of the latch bolt (1) and/or the pivot lever (22).

13. A lock according to claim 12,
**characterized in**
**that** a Hall sensor (57) in cooperation with a permanent magnet (58) serves as detection device (54), wherein the Hall sensor (57) or the permanent magnet (58) is associated with the latch bolt (1) and/or the pivot lever (22).

## Revendications

1. Dispositif de verrouillage pour un clapet de réservoir ou hayon dans un véhicule, comportant un boulon de verrouillage (1) pouvant être déplacé entre une position d'ouverture et une position de fermeture sous l'effet de l'ouverture ou de la fermeture du clapet de réservoir ou hayon, ledit boulon de verrouillage (1) étant soumis dans le boîtier (2) du dispositif de verrouillage à un guidage forcé dans le sens de son axe longitudinal (6) dans le sens opposé à la force d'un ressort de pression (4), **caractérisé en ce que** le boulon de verrouillage est soumis, en plus, à un guidage forcé autour de son axe longitudinal (6) dans le sens opposé à la force d'un ressort de torsion (3), ledit ressort de torsion (3) permettant de diriger la force dans différentes directions (45, 46), à savoir une fois dans le sens horaire et une fois dans le sens antihoraire.

2. Dispositif de verrouillage selon la revendication 1,
**caractérisé en ce**
**qu'**au niveau du boulon de verrouillage (1), une coulisse (5) fermée en soi fait fonction de guidage forcé (8) sur la surface d'enveloppe (7) de celui-ci et/ou en ce qu'au niveau du boîtier (2), un téton (18), guidé dans la coulisse (5) du côté du boulon, fait fonction de guidage forcé (8).

3. Dispositif de verrouillage selon la revendication 2,
**caractérisé en ce que**
la coulisse (5) comporte deux parties (10, 11) face à face, disposées sensiblement en diagonale.

4. Dispositif de verrouillage selon la revendication 3,
**caractérisé en ce**
**qu'**au niveau de l'extrémité supérieure (12) de la coulisse (5), entre les deux parties (10, 11) disposées en diagonale, il est prévu une partie de coulisse (48) destinée à garantir une position de retenue du boulon de verrouillage (1) dans sa position de fermeture.

5. Dispositif de verrouillage selon la revendication 4,
**caractérisé en ce que**
la partie de coulisse (48) est réalisée sensiblement en forme de V.

6. Dispositif de verrouillage selon la revendication 3,
**caractérisé en ce que**
les parties (10, 11) disposées en diagonale au niveau de l'extrémité supérieure (12) et/ou de l'extrémité inférieure (13) de la coulisse (5) sont reliées par l'intermédiaire d'une jonction (14, 15), de préférence une jonction (14) avec une partie horizontale (16) et/ou une partie verticale (17, 19).

7. Dispositif de verrouillage selon la revendication 1,
**caractérisé en ce que**
la configuration et/ou le montage du ressort de torsion (3) dans le boîtier (2) du dispositif de verrouillage, permettent l'application d'une précontrainte dans les deux directions actives du ressort de torsion (3).

8. Dispositif de verrouillage selon la revendication 7,
**caractérisé en ce que**
le ressort de torsion (3) est réalisé pour prendre appui sur le boîtier (2) du dispositif de verrouillage et sur le boulon de verrouillage (1) et/ou sur un levier pivotant (22) relié de manière fixe au boulon de verrouillage (1).

9. Dispositif de verrouillage selon la revendication 1,
**caractérisé en ce que**
pour verrouiller le clapet de réservoir ou hayon, il est prévu un cliquet d'arrêt (25) qui, lorsque le clapet de réservoir ou hayon est verrouillé, bloque le levier pivotant (22) ou prend appui sur le levier pivotant (22).

10. Dispositif de verrouillage selon la revendication 9,
**caractérisé en ce que**
le cliquet d'arrêt (25) est maintenu dans la position de fermeture par un ressort (26).

11. Dispositif de verrouillage selon la revendication 1,
**caractérisé en ce que**
le dispositif de verrouillage est muni d'un dispositif de détection (54) permettant de détecter la position ouverte du clapet de réservoir ou hayon.

12. Dispositif de verrouillage selon la revendication 11,
**caractérisé en ce**
**qu'**un moyen de commutation (55), qui détecte la position du boulon de verrouillage (1) et/ou du levier pivotant (22), fait fonction de dispositif de détection (54).

13. Dispositif de verrouillage selon la revendication 12,
**caractérisé en ce**
**qu'**un capteur à effet Hall (57) en coopération avec un aimant permanent (58) fait fonction de dispositif de détection (54), ledit capteur à effet Hall (57) ou l'aimant permanent (58) étant associés au boulon de verrouillage (1) et/ou au levier pivotant (22).
